# EUROPÄISCHE PATENTANMELDUNG

(11) **EP 1 145 869 A2**
(43) Veröffentlichungstag der Anmeldung: **17.10.2001**
(21) Anmeldenummer: 01103505.2
(22) Anmeldetag: 15.02.2001
(51) Int. Cl.: B44C 5/04, E04F 11/16

(54) **Treppenstufe mit Beschichtung**

(30) Priorität: 11.04.2000 DE 10017853
(71) Anmelder: Profiform Möbelfronten GmbH & Co., 33415 Verl (DE)
(72) Erfinder: Deppe, Arnold, 33415 Verl (DE); Zaher, Maximilian, 26125 Oldenburg (DE)
(74) Vertreter: von Hellfeld, Axel, Dr. Dipl.-Phys.

(57) **Zusammenfassung**

Eine Treppenstufe weist einen Körper (10) aus Holz oder einem Holzwerkstoff auf. Zumindest auf der Oberseite (10a) des Holzkörpers ist eine Beschichtung vorgesehen mit einer PET-Folie (12), darunter einem Farbdekor (14) und darunter einem Kleber (16) bzw. einem Grundlack (16'). Der Körper (10) der Treppenstufe ist aus zwei Lagen zusammengesetzt, die verklebt sind. Ein UV-härtbarer Lack (18) ist über die PET-Folie aufgetragen. In Abwandlung dieses Beispieles kann auch eine Beschichtung mit "Release"-Technik aufgebracht werden.

## Beschreibung

Die Erfindung betrifft Treppenstufen und hat das Ziel, Treppenstufen bereitzustellen, die kostengünstig herstellbar sind, einen ansprechenden ästhetischen Eindruck machen, möglichst ähnlich einem hochwertigen Holz, und die gute Gebrauchseigenschaften haben, insbesondere eine hohe Schlag- und Kratzfestigkeit.

Die Verwendung von hochwertigen Hölzern für Treppenstufen ist nicht nur teuer, sondern verbraucht auch hochwertige Holz-Resourcen. Auch hier will die Erfindung Abhilfe schaffen und insbesondere auch ein Produkt schaffen, das nach seiner Verwendung relativ leicht "recycelbar" ist.

Hierzu schlägt die Erfindung, gemäß einer ersten Variante, eine Treppenstufe vor, die folgendes aufweist: Einen Körper aus Holz oder einem Holzwerkstoff, wie MDF, wobei zumindest auf der Oberseite des Körpers eine Beschichtung vorgesehen ist mit einer Polyester-Folie (insbesondere und bevorzugt einer PET-Folie), unter der ein Farbdekor angeordnet ist, worunter wiederum ein Kleber und/oder ein Grundlack angeordnet ist. Der Kleber und gegebenenfalls der Grundlack sind also zuunterst auf dem Körper der Treppenstufe angeordnet, wobei gegebenenfalls zwischen dem Kleber bzw. Grundlack und dem eigentlichen Körper der Treppenstufe noch ein Furnier angeordnet sein kann.

Gemäß einer bevorzugten Ausgestaltung ist das vorstehend beschriebene System derart einer Wärmebehandlung unterzogen worden, daß Farbstoffmoleküle aus dem Farbdekor großteils in die darüberliegende Polyester-Folie und darüber hinaus auch in den darunterliegenden Kleber und/oder Grundlack diffundiert sind. Diese Diffusion von Farbstoffmolekülen hat den Vorteil, daß insgesamt die Oberfläche der Treppenstufe eine ästhetisch ansprechende Wirkung hat und dem Betrachter den Eindruck vermittelt, als handle es sich um eine "natürliche" Holzoberfläche (sog. "dreidimensionaler Eindruck"). Dabei kann es zu einer beträchtlichen Expansion der Farbe kommen, typischerweise von mehr als 100 % bis hin zu 1600 %, ohne daß die farbechte Qualität des Eindruckes verlorengeht.

Gemäß einer weiteren bevorzugten Ausgestaltung ist vorgesehen, daß über die Polyester-Folie ein strahlungshärtbarer Lack aufgetragen und gehärtet wird, insbesondere ein UV-härtbarer Lack.

Es ist nicht unbedingt erforderlich, daß die vorstehend beschriebenen Beschichtungen rundum auf die Treppenstufe aufgetragen werden müssen. In aller Regel unterliegen die Unterseiten von Treppenstufen nur einer geringen Belastung. Deshalb ist gemäß einer weiteren bevorzugten Ausgestaltung der Erfindung vorgesehen, daß auf die Unterseite des Körpers der Treppenstufe nur eine Dekor- und Lackschicht aufgebracht wird.

Die bevorzugt verwendete PET-Folie ist transparent. Sie hat zugleich hervorragende mechanische Eigenschaften, insbesondere hinsichtlich der oben genannten Kriterien.

Gemäß einer Variante der Erfindung wird eine Treppenstufe vorgeschlagen, die insbesondere (aber nicht notwendig) die zuvor beschriebenen Beschichtungen aufweisen kann, bei der der Körper der Stufe aus zumindest zwei sich horizontal erstreckenden Lagen aufgebaut ist, die durch eine Kleberschicht miteinander verbunden sind. Die sich horizontal erstreckenden Lagen bestehen aus Holz oder einem Holzwerkstoff wie MDF. Aufgrund der bevorzugt verwendeten, oben angesprochenen Beschichtungen, kann für diese Treppenstufe ein relativ preisgünstiges Holz verwendet werden (als Massivholz), sofern nicht ein kostengünstiger Holzwerkstoff, wie MDF eingesetzt wird.

Wenn im Rahmen dieser Anmeldung von "horizontal" und "oben" bzw. "unten" gesprochen wird, meint dies den normalen Einbauzustand der Treppe.

Gemäß einer bevorzugten Ausgestaltung der vorstehend erläuterten Treppenstufe ist vorgesehen, die Kleberschicht, welche die beiden Lagen miteinander verbindet, durch Fasern zu verstärken, insbesondere Glasfasern oder dergleichen. Die Glasfasern können bevorzugt auch in der Art eines eingelegten Netzes, eventuell zusätzlich zu statistisch verteilten Fasern, eingesetzt werden.

Gemäß einer weiteren Variante schlägt die Erfindung eine Treppenstufe, insbesondere gemäß der vorstehend erläuterten 2-lagigen Konstruktion, vor, mit einem Körper aus Holz oder einem Holzwerkstoff, wobei eine Beschichtung vorgesehen ist aus einer aufgebrachten Lack/Dekor-Schicht und darüber eine Schicht aus einem strahlungsgehärteten Lack, insbesondere einem UV-gehärteten Lack.

Dabei kann gemäß einer weiteren bevorzugten Ausgestaltung vorgesehen sein, daß unter der Lack/Dekor-Schicht ein Furnier auf den Treppenkörper aufgebracht ist.

Die Erfindung betrifft auch Verfahren zum Herstellen von Treppenstufen.

Gemäß einer ersten Variante der Erfindung wird eine Treppenstufe so hergestellt, daß auf einen Körper aus Holz oder einem Holzwerkstoff, die insbesondere MDF, eine Schicht aufgebracht wird aus einem Grundlack und/oder einem Kleber, darauf wird dann eine mit einem Farbdekor versehene Polyester-Folie, insbesondere aus PET aufgebracht.

Eine bevorzugte Weiterbildung dieses Verfahrens sieht vor, daß auf die Folie ein Lack aufgetragen und ausgehärtet wird, insbesondere ein UV-härtbarer Lack.

Eine weitere bevorzugte Ausgestaltung dieses Verfahrens sieht vor, daß durch Erwärmung eine Diffusion von Farbstoffmolekülen aus dem Farbdekor durchgeführt wird. Dabei werden die Prozeßparameter (insbesondere also die Temperatur, aber auch die Auswahl der Farbstoffmoleküle und der Materialien für die Folien bzw. Schichten) so eingestellt, daß die Farbstoffmoleküle zu einem Großteil nach oben und unten diffundieren, d. h. in die Polyester-Folie und in den Kleber bzw. dem Grundlack.

Gemäß einer weiteren bevorzugten Ausgestaltung des erfindungsgemäßen Verfahrens wird das Farbdekor auf die Polyester-Folie (insbesondere PET-Folie) aufgedruckt, wobei es sich als besonders vorteilhaft erwiesen hat, hinsichtlich des ästhetischen Eindruckes, den Druck mit sehr hoher Feinheit durchzuführen, z. B. mit einem Rasterdruck, der eine Feinheit von 120 Raster hat.

Gemäß einer weiteren Variante des erfindungsgemäßen Verfahrens zum Herstellen von Treppenstufen ist vorgesehen, auf einen Körper aus Holz oder einem Holzwerkstoff, wie MDF, mittels der sog. "Release"-Technik eine Lack/Farbdekor-Schicht aufzubringen und dann auf diese Schicht einen Lack aufzutragen, der mit UV-Strahlung gehärtet wird.

Die sog. "Release"-Technik ist als solche bekannt (vgl. insbesondere die EP 0 573 676 A1). Als flächige Träger mit "Release"-Eigenschaften kommen insbesondere in Betracht bestimmte Papiere und auch Kunststoffolien, die an ihrer Oberfläche so gestaltet bzw. präpariert sind, daß unter bestimmten Bedingungen aufgetragene Farbschichten oder Lackschichten in der Art eines "Abpellens" (wie ein Abziehbild) auf ein Substrat übertragbar sind. Für die hier vorliegende Erfindung kommen insbesondere als Träger mit "Release"-Eigenschaft Kunststofffolien, wie insbesondere Polyester-Folien, in Betracht, die eine geeignete Trennschicht aufweisen, um die "Release"-(Abpell)-Eigenschaft zu erreichen.

Die genannte EP 0 573 676 A1 beschreibt bereits die Verwendung eines Trägers mit "Release"-Eigenschaft zum Auftragen von Farbdekor auf ein Substrat. Bei diesem Stand der Technik wird zu diesem Zweck zunächst das Farbdekor auf einen Träger mit "Release"-Eigenschaft aufgebracht, danach über das auf den Träger aufgebrachte Farbdekor ein Lack aufgetragen, der Lack anschließend teilvernetzt und danach unter Druck und/oder erhöhter Temperatur der teilvernetzte Lack mitsamt dem Farbdekor vom Träger auf das letztlich zu dekorierende Substrat so übertragen, daß der Lack unter dem Farbdekor auf dem Substrat aufliegt, abschließend erfolgt dort eine weitere Vernetzung des Lackes auf dem Substrat.

Nachfolgend werden Ausführungsbeispiele der Erfindung mit Blick auf die Zeichnung näher erläutert.

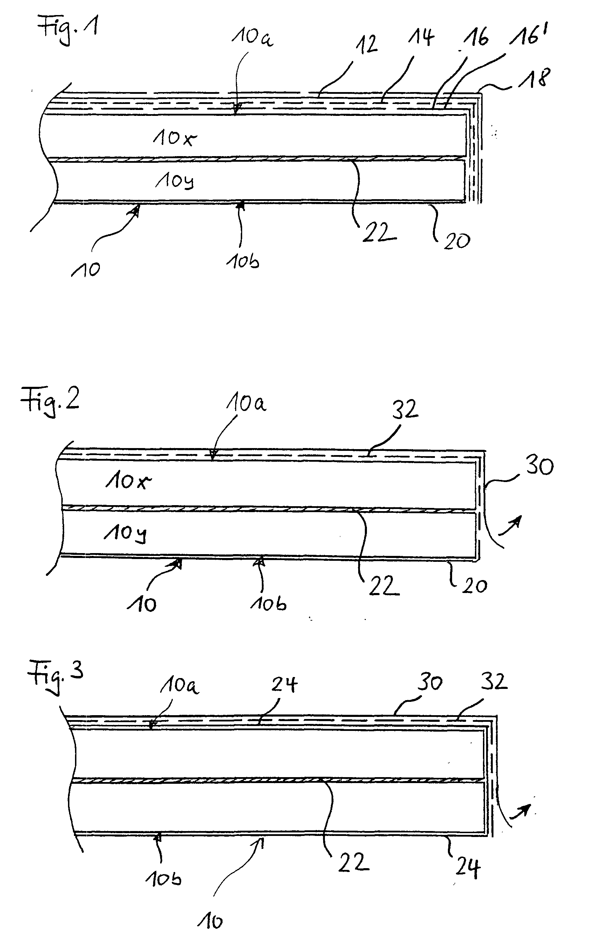

Die Figuren 1, 2 und 3 zeigen jeweils schematisch einen Schnitt durch eine Treppenstufe mit unterschiedlichen Beschichtungen.

Gemäß Figur 1 weist eine Treppenstufe einen Körper 10 auf aus zwei Lagen 10x, 10y, die fest miteinander verbunden sind (siehe unten). Beim dargestellten Ausführungsbeispiel bestehen die Lagen des Körpers 10 der Treppenstufe aus MDF (Mittel-Dichte-Faserplatte). In Abwandlung dieses Ausführungsbeispieles können für die beiden Lagen 10x, 10y auch Massivhölzer verwendet werden, die aufgrund der nachfolgend beschriebenen Beschichtungen relativ preisgünstig sein können.

Der Körper 10 aus den beiden Lagen 10x, 10y der Treppenstufe hat eine Oberseite 10a und eine Unterseite 10b, wobei der "übliche" Einsatz und Gebrauch der Treppe angesprochen ist.

Auf zumindest die Oberseite 10a und den seitlichen Kantenbereich der Treppe wird eine Beschichtung aufgebracht, die gemäß einem ersten Ausführungsbeispiel in Figur 1 schematisch dargestellt ist, wobei die Abstände und Abmessungen der Schichten zur Verdeutlichung stark übertrieben sind.

Zuunterst ist eine Kleberschicht 16 direkt auf der Oberfläche des Treppenkörpers 10. Gegebenenfalls kann unter der Kleberschicht noch ein Grundlack vorgesehen sein. Der Grundlack wird bevorzugt in Holzfarbe gewählt.

Darüber ist die Schicht aus Farbdekor 14. Das Farbdekor wird so ausgeführt, wie Holz, d. h. es entspricht der natürlichen Maserung und Strukturierung sowie dem farblichen Eindruck eines gewünschten hochwertigen Holzes. Für den Farbstoff des Farbdekors 14 wird eine Diffusionsfarbe gewählt mit geeigneten Molekulargewichten, um die weiter unten näher beschriebene Diffusion durchführen zu können.

Über dem Farbdekor 14 liegt eine Polyester-Folie, insbesondere und bevorzugt eine PET-Folie 12.

Die bisher beschriebene, mehrlagige Beschichtung kann insgesamt (d. h. als ganzes) auf den zu dekorierenden und zu beschichtenden Treppenkörper 10 aufgebracht werden. Dabei wird also die PET-Folie mit dem Dekor und der Kleberschicht bzw. Grundlackschicht insgesamt zuvor hergestellt und dann aufgebracht. Es ist auch möglich, zunächst die PET-Folie mit dem Dekor zu bedrucken und dieses System als solches bereitzustellen. Dann wird der Körper 10 der Treppenstufe zunächst unabhängig davon mit der Kleber- bzw. Grundlackschicht versehen und dann die vorstehend beschriebene, farblich dekorierte PET-Folie aufgebracht.

Die vorstehend genannte Schicht aus Kleber und Grundlack kann zweischichtig sein, d. h. zuunterst ein Grundlack direkt auf dem Holzwerkstoff und darüber der Kleber. Es ist auch möglich, diese Schicht aus Kleber und Grundlack homogen zu gestalten, d. h. durchgemischt. Dies ist in Figur 1 mit den Bezugszeichen 16, 16' angedeutet, wobei 16 die Kleberschicht ist und 16' die Grundlackschicht.

Bei diesem Ausführungsbeispiel bleibt die Polyester-Folie auf dem Produkt. Es ist möglich, über die Polyesterfolie einen Lack 18 aufzutragen, bevorzugt einen UV-härtbaren Lack, der abschließend mit UV-Strahlung ausgehärtet wird.

Auf der Unterseite 10b des Treppenstufenkörpers 10 kann eine Dekor- und Lackschicht, ähnlich im optischen Eindruck der oberseitigen Beschichtung, aufgebracht werden, z. B. in der beschriebenen "Release"-Technik. Dabei wird also auf einen "Release"-Träger (nicht in den Figuren gezeigt) eine Schicht aus Dekor und Lack aufgebracht und dann in der Art eines "Abpellens" auf die Unterseite 10b des Treppenkörpers 10 transferiert. Der Lack kann anschließend ebenfalls einer Härtung unterzogen werden.

Die beiden Lagen 10x und 10y des Treppenkörpers sind durch eine Kleberschicht 22 fest miteinander verbunden. Bevorzugt wird als Kleber eine klebende Folie verwendet, die mit Glasfasern verstärkt ist. Hierdurch ergibt sich eine hohe mechanische Festigkeit der Treppenstufe bei geringem Gewicht und Abmessungen. Die Treppenstufe kann insgesamt die Abmessungen einer Treppe aus hochwertigem Naturholz aufweisen, also z. B. eine Gesamtstärke im typischen Bereich zwischen 4 und 6 cm.

Figur 2 zeigt ein weiteres Ausführungsbeispiel, wobei in allen Figuren einander ähnliche und funktionsgleiche Bauteile mit den gleichen Bezugszeichen versehen sind. Beim Ausführungsbeispiel gemäß Figur 2 ist eine Lack-/Farbdekorschicht 32 mittels eines Trägers 30, der "Release"-Eigenschaften hat, aufgebracht. Dabei kann die Lack-/Farbdekorschicht 32 zuvor entweder integral (durchmischt) auf den Träger 30 aufgebracht werden (bevor dieses System dann auf den Körper 10 transferiert wird) oder es können die Lack- und Farbschichten zweilagig auf den Träger 30 aufgebracht werden. In den Figuren 2 und 3 deutet der Pfeil an, daß der Träger 30 nach dem Aufbringen auf den Körper 10 abgezogen wird. Es verbleibt dann die Lack-/Farbdekorschicht 32 auf der Stufe. Danach wird über die Schicht 32 eine Lackschicht aufgebracht, bevorzugt eine UV-Lackschicht (wie oben).

Für den Träger 30 mit "Release"-Eigenschaft wird bevorzugt PVA verwendet.

Bei dieser Variante gemäß Figur 2 wird bevorzugt sehr kostengünstiges Massivholz für die beiden Lagen 10x, 10y des Treppenstufenkörpers 10 verwendet. Der Kleber 22 ist oben beschrieben.

Der UV-härtbare Lack ist bevorzugt ein sog. "High-Solid-Lack" mit mehr als 90° Harz und keiner Verdünnung. Er hat eine relativ niedrige Viskosität und wird beim Verspritzen temperiert. Er ermöglicht eine sehr hohe Spritzgeschwindigkeit, hat eine hohe Spannkraft und hohe Abriebfestigkeit, bevorzugt wird das Produkt "Violux" (Handelsname), verwendet.

Figur 3 zeigt eine Abwandlung des Ausführungsbeispieles von Figur 2 dahingehend, daß direkt auf zumindest die Oberseite 10a des Körpers 10 ein Furnier 24 aus Holz aufgebracht ist.

Bei den Ausführungsbeispielen gemäß den Figuren 2 und 3 kann ein Kleber (nicht gezeigt) unter der Lack-/Farbdekorschicht 32 angeordnet sein. Auch der zuoberst aufgetragene UV-Lack ist in den Figuren nicht dargestellt.

## Patentansprüche

1. Treppenstufe, aufweisend einen Körper (10) aus Holz oder einem Holzwerkstoff, wie MDF, und zumindest auf der Oberseite (10a) des Körpers (10) eine Beschichtung mit einer Polyester-Folie (12), darunter einem Farbdekor (14) und darunter einem Kleber (16) und/oder einem Grundlack (16'), wobei die Polyester-Folie (12) bevorzugt eine PET-Folie ist.

2. Treppenstufe nach Anspruch 1, **dadurch gekennzeichnet, daß** das Farbdekor (14) teilweise in die Polyester-Folie (12) und/oder den Kleber (16) und/oder gegebenenfalls den Grundlack (16') diffundiert ist.

3. Treppenstufe nach einem der Ansprüche 1 oder 2, **dadurch gekennzeichnet, daß** ein strahlungsgehärteter Lack (18) auf die Polyester-Folie (12) aufgetragen ist.

4. Treppenstufe nach einem der vorhergehenden Ansprüche, **dadurch gekennzeichnet, daß** auf die Unterseite (10b) des Körpers (10) eine Dekor- und Lackschicht (20) aufgebracht ist.

5. Treppenstufe nach einem der vorhergehenden Ansprüche, **dadurch gekennzeichnet, daß** die Polyester-Folie transparent ist.

6. Treppenstufe, insbesondere nach einem der Ansprüche 1 bis 5, **gekennzeichnet durch** einen Aufbau des Körpers (10) der Stufe aus zumindest zwei sich horizontal erstreckenden Lagen (10x, 10y) aus Holz oder einem Holzwerkstoff, wie MDF, die **durch** eine Kleberschicht (22) verbunden sind.

7. Treppenstufe nach Anspruch 6, **dadurch gekennzeichnet, daß** die Kleberschicht (22) faserverstärkt ist, insbesondere mit Glasfasern.

8. Treppenstufe, insbesondere nach einem der Ansprüche 6 oder 7, mit einem Körper (10) aus Holz oder einem Holzwerkstoff, wie MDF, **gekennzeichnet durch** eine Beschichtung aus einer aufgebrachten Lack/Dekor-Folie und darüber einer Schicht aus strahlungsgehärtetem Lack.

9. Treppenstufe nach Anspruch 8, **dadurch gekennzeichnet, daß** unter der Lack/Dekor-Folie ein Furnier (24) auf den Körper (10) aufgebracht ist.

10. Verfahren zum Herstellen einer Treppenstufe, wobei auf einen Körper (10) aus Holz oder einem Holzwerkstoff, wie MDF, eine Schicht aus einem Grundlack (16') und/oder einem Kleber (16) aufgebracht wird und darauf eine mit einem Farbdekor (14) versehene Polyester-Folie (12), insbesondere aus PET.

11. Verfahren nach Anspruch 10, **dadurch gekennzeichnet, daß** auf die Folie (12) ein Lack (18) aufgetragen und ausgehärtet wird, insbesondere ein UV-härtbarer Lack.

12. Verfahren nach einem der Ansprüche 10 oder 11, **dadurch gekennzeichnet, daß** unter Erwärmung eine Diffusion von Farbstoffmolekülen aus dem Farbdekor (14) in die Polyester-Folie (12) und/oder den Kleber (16) und gegebenenfalls den Grundlack (16') durchgeführt wird.

13. Verfahren nach einem der Ansprüche 10, 11 oder 12, **dadurch gekennzeichnet, daß** das Farbdekor (14) auf die Polyester-Folie (12) aufgedruckt wird, insbesondere mit Rasterdruck in einer Feinheit von 120 Raster.

14. Verfahren zum Herstellen einer Treppenstufe, wobei auf einen Körper (10) aus Holz oder einem Holzwerkstoff, wie MDF, mittels eines "Release"-Trägers (30) eine Lack/Farbdekor-Schicht (32) aufgebracht wird und auf die Lack/Farbdekor-Schicht (32) ein Lack (34), der mit Strahlung, insbesondere UV-Strahlung, gehärtet wird.
